# EUROPÄISCHE PATENTSCHRIFT

(11) **EP 0 991 726 B1**
(45) Veröffentlichungstag und Bekanntmachung des Hinweises auf die Patenterteilung: **09.01.2002**
(21) Anmeldenummer: 98934948.5
(22) Anmeldetag: 10.06.1998
(51) Int. Cl.: C09B 67/48, C09B 67/22, C09B 67/38, C09B 67/10

(54) **FÄRBESTABILER MONOAZOFARBSTOFF, DESSEN HERSTELLUNG UND VERWENDUNG**
COLOR-STABLE MONOAZO COLORANT, ITS PRODUCTION AND USE
COLORANT MONOAZOIQUE A STABILITE DE NUANCE, SA FABRICATION ET SON UTILISATION

(30) Priorität: 23.06.1997 DE 19726425
(43) Veröffentlichungstag der Anmeldung: 12.04.2000
(73) Patentinhaber: DyStar Textilfarben GmbH & Co. Deutschland KG, 60318 Frankfurt am Main (DE)
(72) Erfinder: HERD, Karl-Josef, D-51519 Odenthal (DE); BÜHLER, Karl-Ulrich, D-63755 Alzenau (DE); KRUSE, Hubert, D-61462 Königstein (DE); HIMENO, Kiyoshi, Munakata-city, Fukuoka 811-3425 (JP); YAMADA, Kazuo, Kitakyusyu-city, Fukuoka 807-0871 (JP); ZAKARIA, Twindy, Puri Indah, Jakarta Barat (ID); MARSUDIDJAJA, Kadi, Jakarta Pusat (ID)
(86) Internationale Anmeldenummer: EP9803508
(87) Internationale Veröffentlichungsnummer: WO9859009

(56) Entgegenhaltungen:
- EP-A- 0 228 092
- EP-A- 0 718 376
- WO-A-96/29368
- FR-A- 2 292 745
- GB-A- 1 407 495
- CHEMICAL ABSTRACTS, vol. 93, no. 20, 17. November 1980 Columbus, Ohio, US; abstract no. 187744f, XP002080284 & CZ 182 650 A (VANC VACLAV ET AL)
- CHEMICAL ABSTRACTS, vol. 103, no. 16, 21. Oktober 1985 Columbus, Ohio, US; abstract no. 124943z, XP002080285 & RO 83 987 A (COLOROM)
- CHEMICAL ABSTRACTS, vol. 109, no. 2, 11. Juli 1988 Columbus, Ohio, US; abstract no. 8019c, XP002080286 & DD 248 601 A (VEB CHEMIEKOMBINAT BITTERFELD)
- PATENT ABSTRACTS OF JAPAN vol. 096, no. 002, 29. Februar 1996 & JP 07 258572 A (NIPPON KAYAKU CO LTD), 9. Oktober 1995

## Beschreibung

Die vorliegende Erfindung betrifft eine neue färbestabile Kristallmodifikation des Farbstoffs der Formel (I) 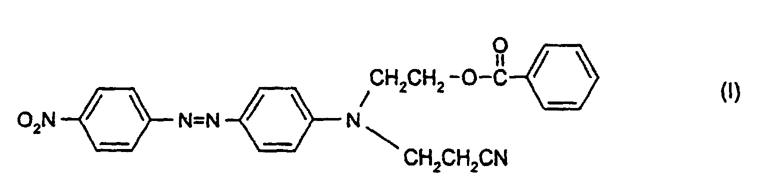 sowie ein Verfahren zu ihrer Herstellung.

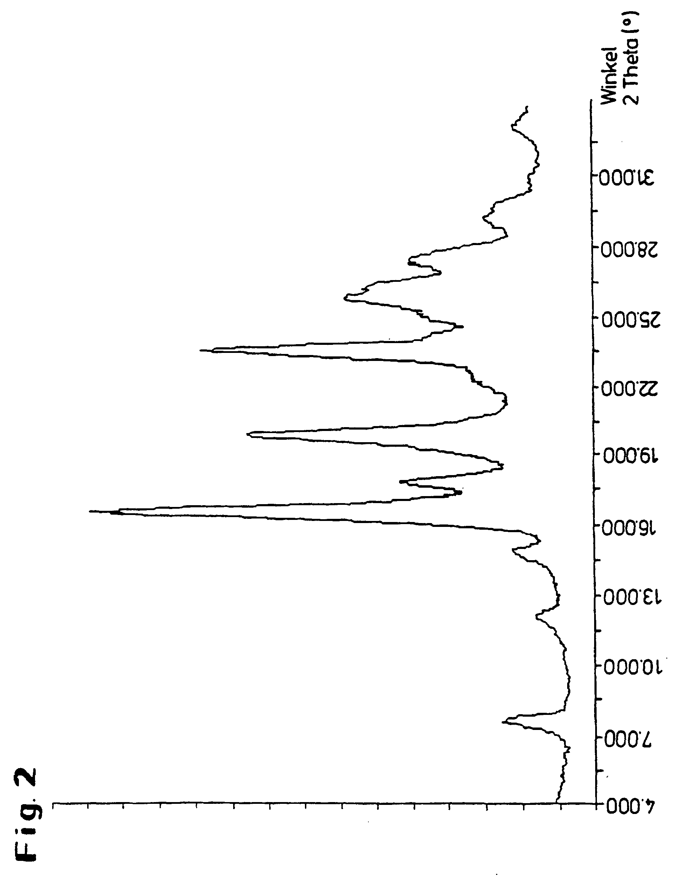

Der Farbstoff der Formel (I) ist an sich bekannt. Er kann auf die in JP-A-9113264 beschriebene Weise durch Diazotieren von 4-Nitroanilin und Kuppeln auf N-(2--Cyanethyl)-N-(2-benzoyloxyethyl)anilin in wäßrig-mineralsaurem Medium erhalten werden. Zur Verbesserung der Filtrierbarkeit wird er dabei in der Kupplungsreaktionsmischung bei einer Temperatur von 40-100°C hitzebehandelt. Dabei fällt er aber in einer instabilen Kristallmodifikation ("α-Modifikation") an, deren Röntgenbeugungsdiagramm (Cu-K_{α}-Strahlung) in Figur 2 wiedergegeben ist und die charakterisiert ist durch Linien bei folgenden Beugungswinkeln 2 θ (°):
- Linien starker Intensität:: 16,3; 17,6; 19,7; 23,2; 25,4; 26,0; 27,2;
- Linien mittlerer und schwacher Intensität:: 7,3; 11,7; 14,6; 22,0; 24,7; 28,8; 29,6;

Weiterhin sind Mischungen von Benzthiazol-Typ Dispersionsfarbstoffen den Farbstoff der Formel (I) enthaltend aus EP-A-0 228 092 bekannt.

Pulver- und Flüssigpräparationen, die aus dem Farbstoff in der instabilen Kristallmodifikation hergestellt werden, weisen erhebliche technische Mängel auf, insbesondere bei ihrer Handhabung, jedoch auch bereits bei ihrer Herstellung sowie auch beim Färben von textilen Polyestermaterialien. Technische Mängel bei ihrer Handhabung treten beispielsweise bei der Redispergierung dieser Präparationen auf, d.h. bei ihrer Einarbeitung in Färbeflotten und Druckpasten. Probleme wie Sedimentation, Agglomeration, Phasentrennung sowie kittiger Bodensatz treten insbesondere auf, wenn diese Präparationen in redispergierter Form in modernen Farbküchen eingesetzt werden.

Ein weiterer technischer Mangel bei der Herstellung ist beispielsweise der, daß der Farbstoff in der α-Modifikation sich nur zu Pulverpräparationen mit relativ niedrigem Farbstoffgehalt verarbeiten läßt, wo er durch den hohen Anteil an Dispergiermitteln gerade noch ausreichend dispergiert wird. Ein weiterer technischer Mangel ist, daß er nur bei relativ niedrigen Trocknereingangstemperaturen sprühgetrocknet werden kann.

Methoden zur Überführung von anderen Dispersionsfarbstoffen in stabilere Kristallmodifikationen sind beispielsweise aus EP-A-0 718 376 oder WO 96 29368A bekannt.

Aufgabe der vorliegenden Erfindung war es, färbestabile Farbstoffmodifikationen des Farbstoffes der Formel (I) sowie Verfahren zu deren Herstellung bereitzustellen.

Es wurde eine neue färbestabile Kristallmodifikation β-Modifikation des Farbstoffs der Formel (I) gefunden, 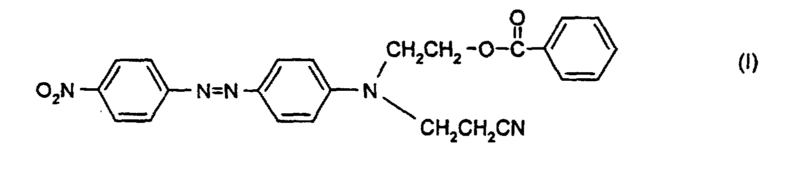 die im Röntgenbeugungsdiagramm (Cu-K_{α}-Strahlung) jeweils Linien bei folgenden Beugungswinkeln 2 θ (°) aufweist:
- Linien starker Intensität:: 10,1; 16,2; 17,6; 20,0; 23,8; 25,0; 26,0; 26,7;
- Linien mittlerer und schwacher Intensität:: 8,1; 8,9; 18,9; 22,2; 28,3; 29,3;

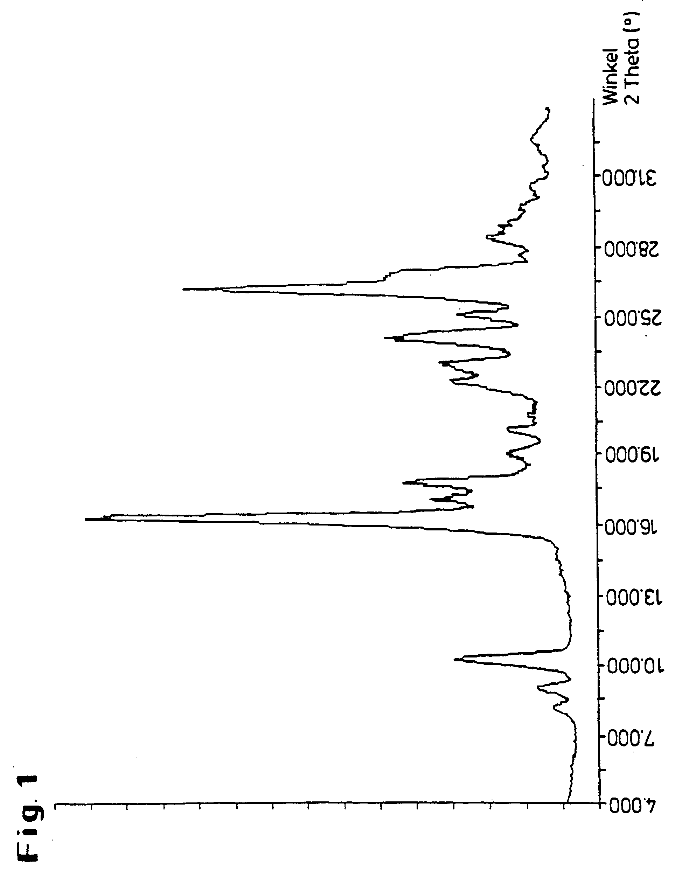

Das mit Cu-K_{α}-Strahlung aufgenommene Röntgenbeugungsdiagramm der färbestabilen β-Modifikation ist in Figur 1 dargestellt. Zur Aufnahme wurde ein rechnergesteuertes Siemens D 500-Pulverdiffraktometer benutzt.

Problemlos läßt sich der Farbstoff einsetzen, wenn er in der erfindungsgemäßen β-Modifikation vorliegt. Mit dieser β-Modifikation lassen sich bei der Herstellung von Pulverpräparationen höhere Raum-Zeit-Ausbeuten erzielen, und Färbungen auf Stückware und Wickelkörpern fallen stippenfrei bzw. ohne Farbstoffablagerungen, also homogen, an. Flüssigpräparationen sind über einen breiten Temperaturbereich hinweg lagerstabil.

Die Erfindung betrifft außerdem Farbstoffmischungen, enthaltend den Farbstoff der Formel (I) in der α- und β-Modifikation. Bevorzugt sind derartige Mischungen mit mehr als 50 Gew.-%, vorzugsweise mehr als 70 Gew.-%, an Farbstoff I in der β-Modifikation, bezogen auf die Summe von I in der α- und β-Modifikation.

Die erfindungsgemäßen Farbstoffmischungen weisen ebenfalls die beschriebenen vorteilhaften Eigenschaften auf.

Die Erfindung betrifft weiterhin ein Verfahren zur Herstellung des erfindungsgemäßen Farbstoffes I in der β-Modifikation sowie den ebenfalls erfindungsgemäßen Mischungen dieses Farbstoffes mit seiner α-Modifikation, dadurch gekennzeichnet, daß man den Farbstoff der Formel (I) in der α-Modifikation in einem wäßrigen Reaktionsmedium bei einer Temperatur von 101 bis 160°C, gegebenenfalls unter Druck tempert.

Bei der Temperung erfolgt die Umwandlung von der α- in die β-Modifikation, wobei eine unvollständige Umwandlung zu den erfindungsgemäßen Mischungen führt. Man kann auch von einer Mischung, enthaltend den Farbstoff I in seiner α- und β-Modifikation, ausgehen. In diesem Fall führt das erfindungsgemäße Verfahren bei vollständiger Umwandlung zur β-Modifikation und bei unvollständiger Umwandlung zu einer Anreicherung der β-Modifikation in der Mischung.

Bevorzugt erfolgt die Umwandlung bei einer Temperatur von 101 bis 150°C, insbesondere bei 105° bis 140°C.

Liegt die anzuwendende Temperatur oberhalb des Siedepunktes des verwendeten Reaktionsmediums, erfolgt das erfindungsgemäße Verfahren unter Druck, vorzugsweise in einem Autoklaven. Der sich dabei einstellende Druck hängt von der Temperatur ab.

Die vollständige Überführung der α- in die β-Modifikation nimmt je nach Ansatzgröße 0,5 bis 5 Stunden in Anspruch, wobei das Reaktionsende durch röntgenografische Untersuchung der während der Hitzebehandlung entnommenen Proben erfolgen kann.

Für das erfindungsgemäße Verfahren kann das wäßrige Reaktionsmedium auch oberflächenaktive Substanzen enthalten.

Als oberflächenaktive Substanzen können beispielsweise benetzend, viskositätsmindernd, dispergierend oder anlösend wirkende Substanzen eingesetzt werden, die anionischer, kationischer oder nichtionischer Natur sind.

Geeignete oberflächenaktive Substanzen sind z.B. Alkalisalze von Ligninsulfonaten, Alkalisalze der Kondensationsprodukte aus Naphthalinsulfonsäuren und Formaldehyd, Polyvinylsulfonate, oxethylierte Novolake, oxethylierte Fettalkohole, Fettsäurepolyglykolester und tertiäre Phosphorsäureester. Die oberflächenaktiven Substanzen können einzeln oder in Kombination miteinander verwendet werden.

Die Menge der eingesetzten oberflächenaktiven Substanzen, bezogen auf den Farbstoff I in der α-Modifikation, kann zwischen 0,01 und 400 % betragen und hängt von der Weiterverarbeitung ab.

Nach der teilweisen oder vollständigen Umwandlung in die β-Modifikation des Farbstoffes I kann der Farbstoff in der β-Modifikation bzw. seine Mischung von α- und β-Modifikation beispielsweise durch Filtration aus dem wäßrigen Reaktionsmedium isoliert werden. Wählt man diesen Weg der Isolierung, werden die oberflächenaktiven Substanzen vorzugsweise in einer Menge von 0,01 bis 25 Gew.-%, bezogen auf eingesetzte Farbstoffmenge der α-Modifikation verwendet.

Vorteilhaft für das erfindungsgemäße Umwandlungsverfahren ist der Zusatz von Impfkrisiallen des Farbstoffs in der stabileren Kristallmodifikation. Bezogen auf den eingesetzten Farbstoff in der α-Modifikation werden Mengen bevorzugt zwischen 1 und 25 % eingesetzt.

Der Farbstoff der Formel I wird vorzugsweise unmittelbar nach der erfindungsgemäße Wärmebehandlung ohne Zwischenisolierung gefinisht, d.h. in die handelsübliche Pulver- oder Flüssigpräparation überführt. Zu diesem Zweck wird die nach dem erfindungsgemäßen Verfahren, vorzugsweise als wäßrige Suspension, anfallende Reaktionsmischung, durch Mahlung in eine feinteilige Dispersion überführt. Für dieses Finishing werden vorzugsweise Dispergier- und gegebenenfalls weitere Hilfsmittel verwendet, wie sie bereits teilweise oben beschrieben sind. Diese werden vorzugsweise vor, während oder erst nach der erfindungsgemäßen Umwandlung der α-Modifikation zugegeben.

Dispergiermittel sind mit den obengenannten oberflächenaktiven Substanzen identisch Wurde während des erfindungsgemäßen Verfahrens nicht die Gesamtmenge dieser Dispergier- und Hilfsmittel zugesetzt, so kann vor der Mahlung die Restmenge zugegeben werden. Zur Wärmebehandlung werden in diesem Falle in der Regel 10 bis 400 Gew.-%, vorzugsweise 20 bis 200 Gew.-%, oberflächenaktive Substanzen, bezogen auf den eingesetzten Farbstoff in der α-Modifikation, zugegeben.

Die Überführung der α- in die β-Modifikation durch die erfindungsgemäße Wärmebehandlung in wäßriger Phase kann unter Zusatz eines oder mehrerer organischer Lösungsmittel erfolgen. Diese organischen Lösungsmittel sind beispielsweise mit Wasser in jedem Verhältnis mischbar oder mischen sich nicht oder aber nur wenig mit Wasser.

Mit Wasser mischbare Lösungsmittel sind beispielsweise Ethanol, i-Propanol, Dimethylsulfoxid, Dimethylformamid, N-Methylpyrrolidinon. Mit Wasser nicht oder nur wenig mischbare Lösungsmittel sind beispielsweise n-Butanol, Butylacetat und Toluol.

Die Menge an organischen Lösungsmitteln, bezogen auf das wäßrige Reaktionsmedium, kann in weiten Grenzen variieren. Bei mit Wasser mischbaren Lösungsmitteln beträgt die Menge vorzugsweise 5 bis 95 Gew.-%, insbesondere 10 bis 50 Gew.-%. Bei mit Wasser wenig oder nicht mischbaren Lösungsmitteln liegt sie im allgemeinen bei 1 bis 25 Gew.-%, vorzugsweise bei 2 bis 10 Gew.-%.

Nach der Überführung in die β-Modifikation wird gegebenenfalls verwendetes organisches Lösungsmittel in der Regel durch Destillation oder Wasserdampfdestillation von der Farbstoffsuspension abgetrennt und der Farbstoff aus der wäßrigen Phase durch Filtration isoliert. Der Farbstoff kann jedoch auch aus dem lösungsmittelhaltigen Reaktionsmedium direkt durch Filtration isoliert werden.

Vorteilhaft ist es, beim Erhitzen des Farbstoffs in wäßriger Phase, das Reaktionsmedium sowohl einer rein wäßrigen als auch einer organische Lösungsmittel enthaltenden Phase, den pH-Wert der Wasserphase auf 6 bis 11, insbesondere 7 bis 10, einzustellen und bei diesem pH-Wert zu halten, da es sonst zu Farbstärkeverlusten und Farbtonabweichungen kommen kann.

Der bei dem erfindungsgemäßen Verfahren eingesetzte Farbstoff I in der α-Modifikation kann beispielsweise als Feststoff dem wäßrigen Reaktionsmedium zugegeben werden, vorzugsweise setzt man jedoch die wäßrige Kupplungssuspension ein, die nach der Herstellung der α-Modifikation des Farbstoffs 1 erhalten wird.

Dabei ist es vorteilhaft die bei der Kupplungsreaktion entstandende Mineralsäure ganz oder teilweise zu neutralisieren. Bevorzugt wird der oben angegebene pH-Wert eingestellt.

Der in der α-Modifikation vorliegende Farbstoff der Formel (I) kann auch durch Umkristallisieren aus einem organischen Lösungsmittel oder Mischungen von organischen Lösungsmitteln in die stabile β-Modifikation überführt werden.

Geeignete organische Lösungsmittel sind beispielsweise Ethanol, Butylacetat oder Toluol. Bevorzugt sind organische Carbonsäuren, wie Ameisensäure oder Propionsäure und vorzugsweise Essigsäure.

Sinnvollerweise wird bei dieser erfindungsgemäßen Verfahrensvariante die umzuwandelnde α-Modifikation in dem gewählten organischen Lösungsmittel durch Erwärmen gelöst, worauf beim Abkühlen die β-Modifikation oder aber Mischungen aus α- und β-Modifikation auskristallisiert. Alternativ kann die β-Modifikation durch Zugabe eines schlechter lösenden Lösungsmittels, z.B. Wasser, aus der Lösung ausgefällt werden. Die Menge der eingesetzten Lösungsmittel, die Lösetemperaturen sowie die gegebenenfalls zum Ausfällen verwendete Menge an Wasser bzw. an einem schlechter lösenden Lösungsmittel richten sich dabei nach dem Lösevermögen dieser Lösungsmittel. Die Löse- bzw. Kristallisiertemperaturen liegen dabei vorzugsweise zwischen 20°C bis 150°C.

Der erhaltene Farbstoff in der β-Modifikation kann beispielsweise durch Filtration aus dem Lösungsmittel isoliert werden. Es ist jedoch auch möglich, das Lösungsmittel, z.B. nach Wasserzusatz, durch Destillation oder Wasserdampfdestillation abzudestillieren und anschließend den Farbstoff durch Filtration aus der wäßngen Phase zu isolieren.

Die Erfindung betrifft weiterhin ein Verfahren zur Herstellung des Farbstoffs I in der erfindungsgemäßen β-Modifikation sowie seine Mischung von α- und β-Modifikation durch Azokupplung, das dadurch gekennzeichnet ist, daß man diazotiertes 4-Nitroanilin (Diazokomponente) auf N-(2-Benzoyloxethyl)-N-(2-cyanethyl)anilin (Kupplungskomponente) in mineralsaurem wäßrigem Medium in Gegenwart von Impfkristallen der färbestabilen β-Modifikation kuppelt. Die Diazokomponente wird vorzugsweise vorgelegt und die Kupplungskomponente zur Diazokomponente zugegeben.

Die Zugabe von Impfkristallen der β-Modifikation kann vor oder während der erfindungsgemäßen Kupplungsreaktion, vorzugsweise vor der Kupplung erfolgen. Die Zugabe erfolgt zweckmäßig bei der Kupplungstemperatur, vorzugsweise bei einer Temperatur von -10°C bis +40°C.

Die Impfkristalle sollten sich dabei nicht wesentlich lösen. Dies kann erreicht werden, indem man sie unmittelbar vor der Kupplung oder aber in ausreichender Menge zusetzt. Bei der bevorzugten "indirekten" Kupplung werden sie vorzugsweise der vorgelegten Diazolösung zugesetzt. Auch hier gilt, daß sie sich möglichst nicht lösen sollen, da sonst zusätzlich eine Verseifung der Farbstoffmoleküle stattfinden kann.

Die Menge der eingesetzten Impfkristalle beträgt 0,1 bis 25 %, vorzugsweise 1 bis 10 %, bezogen auf die Menge des bei der Kupplung erhaltenen Farbstoffs.

Das mineralsaure wäßrige Medium kann zusätzlich organische Carbonsäuren bzw. deren Salze enthalten.

Die erfindungsgemäße Kupplungsreaktion kann auch in Gegenwart von geeigneten Kupplungshilfsstoffen durchgeführt werden.

Mineralsäuren, die bei der Kupplung mit Wasser verdünnt werden, oder aber schon in wäßrig verdünnter Form eingesetzt werden können, sind Salzsäure, Schwefelsäure oder Phosphorsäure. Organische Carbonsäuren sind vorzugsweise die niederen aliphatischen Carbonsäuren wie Ameisensäure, Essigsäure oder Propionsäure.

Kupplungshilfsstoffe sind einzelne Hilfsstoffe oder Mischungen von Hilfsstoffen aus der Reihe der tertiären Phosphorsäureester von Fettalkoholen und/oder Fettalkoholpolyethylenglykolethern: der tertiären Phosphorsäureester von Fettalkoholpolyethylenglykolethern und/oder Polythylenglykolen; der Fettalkoholpolyethylenglykolether; der Fettsäurepolyethylenglykolester; der Tributylphenylpolyethylenglykolether; und der Nonylphenylpolyethylenglykolether.

Die erfindungsgemäß einsetzbaren Kupplungshilfsstoffe sind oberflächenaktive Substanzen. Sie sind bekannt und können nach bekannten Methoden hergestellt werden. Die technisch hergestellten Produkte sind vielfach Substanzgemische und können in dieser handelsüblichen Form eingesetzt werden.

Im Rahmen der vorliegenden Erfindung sind unter Fettalkoholen, von denen sich die genannten Kupplungshilfsmittel zum Teil ableiten, bevorzugt C₁₀- bis C₁₈-Alkohole, besonders bevorzugt C₁₄- bis C₁₈-Alkohole, zu verstehen, die auf gesättigte oder ungesättigte, geradkettige oder verzweigte aliphatische Kohlenwasserstoffe zurückgehen, wobei Basis für ein Kupplungshilfsmittel nicht nur ein einzelner Fettalkohol mit bestimmter Kohlenstoffatomzahl sein kann, sondern ebenso ein Gemisch von Alkoholen mit beispielsweise unterschiedlichen Kohlenstoffatomzahlen und/oder unterschiedlichem Sättigungsgrad in beliebigen Mengenverhältnissen. Geeignet als Basis für die erfindungsgemäßen Hilfsmittel sind beispielsweise Lauryialkohol, Myristylalkohol, Palmitylalkohol, Stearylalkohol, der ungesättigte Oleylalkohol, gesättigte Kokosfettalkohole mit 10 bis 18 Kohlenstoffatomen, gesättigte Talgfettalkohole mit 16 bis 18 Kohlenstoffatomen oder ein oleylalkoholhaltiges Gemisch mit 16 bis 18 Kohlenstoffatomen. Im folgenden wird für den gesättigten oder ungesättigten (C₁₀-C₁₈)-Kohtenwasserstoffrest von Fettalkoholen die Bezeichnung R⁰ verwendet, Fettalkohole haben dann also die Formel R⁰OH.

Die Polyethylenglykoleinheiten, die in den genannten Kupplungshilfsmitteln enthalten sind, gehen auf die Polyethylenglykole der Formel H(OCH₂CH₂)ₙOH zurück, aus denen formal durch Veretherung und/oder Veresterung an einer oder beiden Hydroxygruppen die Kupplungshilfsmittel erhalten werden. Bei der technischen Herstellung der Kupplungshilfsmittel wird die Polyethylenglykoleinheit insbesondere durch Umsetzung, z.B. eines Fettalkohols, mit Ethylenoxid eingeführt, wobei die Molzahl Ethylenoxid pro Mol zu oxethylierender Substanz in weiten Grenzen variiert werden kann. Bei der technischen Oxethylierung fallen im allgemeinen Gemische von Substanzen mit unterschiedlichem Oxethylierungsgrad an, und die ein technisches Produkt charakterisierende mittlere Molzahl Ethylenoxid pro mol zu oxethylierender Substanz ist vielfach auch keine ganze, sondern eine gebrochene Zahl.

Tertiäre Phosphorsäureester von Fettalkoholen und/oder Fettalkoholpolyethylenglykolethern sind Verbindungen der Formel O=P(OR¹)(OR²)(OR³), in denen die Reste R¹, R² und R³ gleich oder verschieden sein können. Die zugrundeliegenden Alkohole R¹OH, R²OH und R³OH können unabhängig voneinander Fettalkohole der Formel R⁰OH oder Fettalkoholpolyethylenglykolether der Formel R⁰(OCH₂CH₂)ₚOH sein, wobei p bevorzugt eine Zahl von 1 bis 10, besonders bevorzugt eine Zahl von 1 bis 4 ist.

Tertiäre Phosphorsäureester von Fettalkoholpolyethylenglykolethern und/oder Polyethylenglykolen sind Verbindungen der Formel O=P(OR⁴)(OR⁵)(OR⁶), in denen die Reste R⁴, R⁵ und R6 gleich oder verschieden sein können. Die zugrundeliegenden Alkohole R⁴OH, R⁵OH und R⁶OH können unabhängig voneinander Fettalkoholpolyethylenglykolether der Formel R⁰(OCH₂CH₂)_{q}OH oder Polyethylenglykole der Formel H(OCH₂CH₂)ᵣOH sein, wobei q bevorzugt eine Zahl von 1 bis 10, besonders bevorzugt eine Zahl von 1 bis 4 ist und r bevorzugt eine Zahl von 2 bis 15, besonders bevorzugt eine Zahl von 5 bis 10 ist.

Fettalkoholpolyethylenglykolether sind Verbindungen der Formel

R⁰(OCH₂CH₂)ₛOH,

in der s bevorzugt eine Zahl von 5 bis 50, besonders bevorzugt eine Zahl von 10 bis 30 ist.

Fettsäurepolyethylenglykolester sind Verbindungen der Formel

R⁷CO(OCH₂CH₂)ₜOH,

in der t bevorzugt eine Zahl von 5 bis 50, besonders bevorzugt eine Zahl von 10 bis 30 ist. R⁷ ist der gesättigte oder ungesättigte Kohlenwasserstoffrest einer Fettsäure. Bevorzugte Fettsäuren der Formel R⁷COOH sind dabei im Rahmen der vorliegenden Erfindung gesättigte oder ungesättigte C₁₀- bis C₂₀-Fettsauren, besonders bevorzugt sind C₁₆- bis C₁₉-Fettsäuren. Beispiele für geeignete Fettsäuren sind Myristinsäure, Palmitinsäure, Stearinsäure oder Ölsäure sowie ihre Gemische in beliebigen Mengenverhältnissen.

Tributylphenylpolyethylenglykolether sowie Nonylphenylpolyethylenglykolether sind Verbindungen der Formel Ar(OCH₂CH₂)ᵤOH, in der u bevorzugt eine Zahl von 5 bis 50, besonders bevorzugt eine Zahl von 10 bis 30 ist und Ar einen Tributylphenylrest bzw. einen Nonylphenylrest bedeutet. Bei den zugrundeliegenden Alkylphenolen der Formel ArOH handelt es sich im allgemeinen um technische Produkte, die üblicherweise verschiedene Isomere in unterschiedlichen Mengenverhältnissen enthalten.

Bevorzugt sind als erfindungsgemäße Kupplungshilfsmittel Fettalkoholpolyethylenglykolether und Fettsäurepolyethylenglykolester.

Die erfindungsgemäßen Kupplungshilfsmittel können als grenzflächenaktive Stoffe auch durch ihren HLB-Wert (hydrophilic lipophilic balance) charakterisiert werden, einer bei Tensiden üblichen Maßzahl, die eine Aussage macht zum Verhältnis von Wasserlöslichkeit und Öllöslichkeit (siehe z.B. Römpps Chemie-Lexikon, 8. Auflage, Stuttgart 1983, Seite 1715). Die HLB-Werte der einzusetzenden Fettalkoholpolyethylenglykolether, Fettsäurepolyethylenglykolester und Tributylphenyl- sowie Nonylphenylpolyethylenglykolether liegen bevorzugt bei 8 bis 18, besonders bevorzugt bei 10 bis 16.

Die. Einsatzmengen der erfindungsgemäßen Kupplungshilfsmittel betragen bevorzugt 0,1 bis 10 Gew.-%, besonders bevorzugt 0,5 bis 3 Gew.-%, bezogen auf den bei der Kupplung entstehenden Farbstoff (trocken gerechnet).

Die Durchführung der erfindungsgemäßen Kupplung zur Herstellung des Farbstoffs der Formel (1) in der β-Modifikation erfolgt in an sich bekannter Weise unter den für Kupplungsreaktionen üblichen Bedingungen im wäßrigen Milieu. Beispielsweise wird zunächst die Diazokomponente in üblicher Weise diazotiert, z.B. unter Verwendung von Nitrosylschwefelsäure, wobei vorzugsweise in Schwefelsäure oder in wäßriger Schwefelsäure diazotiert wird, oder eines Alkalimetallnitrits, wie Natriumnitrit, wobei vorzugsweise in Salzsäure diazotiert wird. Eine Lösung oder Suspension der Diazoniumverbindung in der betreffenden Mineralsäure wird beispielsweise vorgelegt und die Kupplungskomponente vorzugsweise in Form einer Lösung oder Suspension in Mineralsäure oder organischen Carbonsäuren wie beispielsweise Essigsäure, zudosiert. Der pH-Wert liegt während der Kupplung vorzugsweise unterhalb von 2, insbesondere unterhalb von 1,5. Als bevorzugte Mineralsäure ist daher 7,5- bis 20-%ige wäßrige Salzsäure oder wäßrige Schwefelsäure, vorzugsweise 30 bis 60 %ig zu nennen. Die Kupplung kann dabei in Gegenwart von Kupplungshilfsstoffen durchgeführt werden. Daneben können bei der Kupplung auch weitere übliche Hilfsmittel zugegen sein, etwa weitere Dispergiermittel, z.B. solche auf Basis von Ligninsulfonaten, oder von Kondensationsprodukten aus Naphthalinsulfonsäuren und Formaldehyd.

Eine Lösung der Kupplungskomponente kann beispielsweise hergestellt werden, indem man die Kupplungskomponente in einer niederaliphatischen Carbonsäure oder in Schwefelsäure bzw. Salzsäure löst. Eine Suspension kann beispielsweise hergestellt werden, indem man die Kupplungskomponente in einer Menge einer niederaliphatischen Carbonsäure oder einer Mineralsäure oder einer Mischung dieser Säuren, die zum vollständigen Lösen nicht ausreicht, anschlägt und unter Rühren fein verteilt oder indem man die Kupplungskomponente in kristalliner Form in Wasser oder in wäßriger Mineral- und/oder organischen Carbonsäuren mit einer Naßmahlung dispergiert.

Die Kupplungstemperaturen liegen im allgemeinen im Bereich von -10°C bis 40°C, bevorzugt bei 0°C bis 20°C. Bei der Durchführung der Kupplung wird üblicherweise direkt, z.B. durch Zugabe von Eis, oder indirekt durch Außenkühlung, gekühlt.

Die Kupplung kann beschleunigt oder vervollständigt werden durch Anheben der Kupplungstemperatur gegen Ende der Kupplungsreaktion oder durch Anheben des pH-Wertes. Der pH-Wert kann beispielsweise angehoben werden durch Zugabe von Puffersubstanzen wie beispielsweise Natriumacetat oder Natriumhydrogenphosphat oder durch Zugabe von Alkali- oder Erdalkalihydroxiden oder -oxiden wie Natriumhydroxid oder Magnesiumoxid, vorzugsweise in gelöster und verdünnter Form.

Die Erfindung betrifft weiterhin ein Verfahren zur Herstellung des Farbstoffes I in der erfindungsgemäßen β-Modifikation öder der ebenfalls erfindungsgemäßen Mischung dieses Farbstoffes mit seiner α-Modifikation, dadurch gekennzeichnet, daß man den Farbstoff I in der α-Modifikation in Gegenwart geeigneter Dispergiermittel bei einer Temperatur von 20 bis 80°C, vorzugsweise bei 50 bis 70°C, mahlt.

Bei der Mahlung erfolgt die Umwandlung von der α- in die β-Modifikation, wobei eine unvollständige Umwandlung zu den erfindungsgemäßen Mischungen führt. Man kann aber auch von einer Mischung, enthaltend den Farbstoff I in seiner α- und β-Modifikation ausgehen, In diesem Fall führt das erfindungsgemäße Mahl-Verfahren bei vollständiger Umwandlung zur β-Modifikation und bei unvollständiger Umwandlung zu einer Anreicherung der β-Modifikation in der Mischung.

Bevorzugt wird eine mittlere Teilchengröße von 5 bis 0,5 µm, insbesondere von 2 bis 0,5 µm, gewählt.

Die eingesetzten Dispergiermittel sind vorzugsweise anionische Dispergiermittel, wie Ligninsulfonate oder Naphthalinsulfonsäure-Formaldehyd-Kondensationsprodukte, es können jedoch auch nichtionogene Dispergiermittel eingesetzt werden.

Die Menge der eingesetzten Dispergiermittel, bezogen auf den Preßkuchen beträgt 10 bis 400 %. vorzugsweise 20 bis 250 % und besonders bevorzugt 30 bis 150 %. Das Aufmahlen erfolgt vorzugsweise in Sand- oder Kugelmühlen, wie sie beim Finish üblicherweise eingesetzt werden. Die Temperatur der Mahlung liegt bei 20°C bis 80°C, bevorzugt bei 30°C bis 70°C, besonders bevorzugt bei 40°C bis 60°C.

Als Dispergiermittel bei der Mahlung kommen insbesondere anionische und/oder nichtionische in Frage. Bevorzugt sind dabei die anionischen Dispergiermittel und Mischungen von anionischen und nichtionischen Dispergiermitteln.

Bei den anionischen Dispergiermitteln haben sich insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und Benzolsulfonsäure, Kondensationsprodukte aus gegebenenfalls substituiertem Phenol mit Formaldehyd und Natriumbisulfit als wirksam erwiesen.

Es kann vorteilhaft sein, neben diesen Dispergiermitteln dem Farbstoff auch andere Hilfsstoffe, wie z.B. Netzmittel, Frostschutzmittel, Entstaubungsmittel, Hydrophilierungsmittel oder Biozide bei der Aufmahlung zuzusetzen.

Weiterhin kommen vor allem Ligninsulfonate in Betracht, z.B. solche, die nach dem Sulfit- oder Kraft-Verfahren gewonnen werden. Vorzugsweise handelt es sich um Produkte, die zum Teil hydrolysiert, oxidiert, propoxyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam.

Besonders geeignet sind Ligninsulfonate mit einem durchschnittlichen Molekulargewicht zwischen 1.000 und 100.000, einem Gehalt an aktivem Ligninsulfonat von 80 % oder mehr und vorzugsweise mit niedrigem Gehalt an mehrwertigen Kationen. Der Sulfonierungsgrad kann in weiten Grenzen variieren.

Nichtionische Dispergiermittel oder Emulgatoren sind z.B. Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen und Carbonsäure-amiden.

Hierbei handelt es sich z.B. um Ethylenoxid-Addukte aus der Klasse der Umsetzungsprodukte von Ethylenoxid mit
a) gesättigten und/oder ungesättigten Fettalkoholen mit 6 bis 20 C-Atomen; oder
b) Alkylphenolen mit 4 bis 12 C-Atomen im Alkylrest, oder
c) gesättigten und/oder ungesättigten Fettaminen mit 14 bis 20 C-Atomen;
d) gesättigten und/oder ungesättigten Fettsäuren mit 14 bis 20 C-Atomen.
Als Ethylenoxid-Addukte sind im einzelnen genannt:
a) Umsetzungsprodukte von gesättigten und/oder ungesättigten Fettalkoholen mit 6 bis 20 C-Atomen, mit 5 bis 30 mol Ethylenoxid,
b) Umsetzungsprodukte von Alkylphenolen mit 4 bis 12 C-Atomen mit 5 bis 20 mol Ethylenoxid;
c) Umsetzungsprodukte von gesättigten und/oder ungesättigten Fettaminen mit 14 bis 20 C-Atomen mit 5 bis 20 mol Ethylenoxid;
d). Umsetzungsprodukte von gesättigten und/oder ungesättigten Fettsäuren mit 14 bis 20 C-Atomen mit 5 bis 20 mol Ethylenoxid.

Bevorzugte feste Farbstoffpräparationen enthalten
- 20 bis 60 Gew.-%: mindestens eines Farbstoffs, der der Formel (I) in der β-Modifikation entspricht,
- 10 bis 80 Gew.-%: Ligninsulfonat
sowie gegebenenfalls die nachfolgenden Zusätze, vorzugsweise in einer Menge von:
- 0 bis 20 Gew.-%: eines Kondensationsprodukts aus Naphthalinsulfonsäure und Formaldehyd
- 0 bis 10 Gew.-%: nichtionisches Tensid
- 0 bis 1,5 Gew.-%: Netzmittel
- 0 bis 1,0 Gew.-%: Entschäumer
- bis 12 Gew.-%: Wasser (R-estfeuchte)
- bis 1,5 Gew.-%: Entstaubungsmittel, vorzugsweise auf Mineralölbasis,
bezogen auf die Farbstoffpräparation.

Bevorzugt ist es, die jeweiligen Bestandteile gemeinsam in einer wäßrigen Suspension in einer Perlmühle bis zur gewünschten Feinverteilung zu mahlen. Dabei kann das Entstaubungsmittel vor, während oder nach der Mahlung der Suspension zugegeben werden. Danach wird vorzugsweise sprühgetrocknet.

Der für die Herstellung von Farbstoffpulvern bzw. Granulaten erforderliche Trocknungsprozeß kann in bandelsüblichen Zerstaubungstrocknern durchgeführt werden.

Mit der erfindungsgemäßen β-Modifikation des Farbstoffes der Formel (1), ist es möglich, Pulver- und Flüssigpräparationen mit höherem Farbstoffgehalt einzustellen. Diese haben den Vorteil, daß bei ihm die Kosten für die Dispergier- und Hilfsmittel sowie die Fertigungskosten, bezogen auf die Farbstärke niedriger sind. Außerdem ist der Anteil an Dispergiermittel, bezogen auf die Farbstärke geringer.

Die erfindungsgemäße β-Modifikation des Farbstoffs der Formel (I) neigt in pulver-oder granulatförmigen und insbesondere in flüssigen Farbstoffpräparationen nicht zur Agglomeration, und sie benetzt beim Ansetzen von Färbe- und Klotzflotten sowie auch von Druckteigen besser als die α-Modifikation und läßt sich rasch und ohne aufwendiges manuelles oder maschinelles Rühren dispergieren. Die Flotten und Druckteige sind homogen und lassen sich in modernen Farbküchen problemlos verarbeiten, ohne die Düsen der Dosierautomaten zu verstopfen.

Die Flüssigpräparationen neigen nicht zur Phasentrennung und insbesondere nicht zur Sedimentation oder zu kittigem Absetzen. Ein ebenfalls aufwendiges Homogenisieren des Farbstoffs im Gebinde vor der Farbstoffentnahme kann somit entfallen.

Der bei der Pulverherstellung nach der Mahlung des Farbstoffs in Gegenwart des Dispergier- und Hilfsmittel anfallende Mahlteig ist auch bei erhöhter Temperatur und über längere Zeit stabil. Der Mahlteig in den Mühlen wie auch nach Verlassen der Mühlen braucht nicht gekühlt zu werden und läßt sich vor der Sprühtrocknung längere Zeit in Sammelbehältern lagern. Die thermische Stabilität äußert sich auch darin, daß die Sprühtrocknung bei hohen Temperaturen durchgeführt werden kann, ohne daß das zu trocknende Gut agglomeriert. Bei gleicher Trocknerausgangstemperatur bedeutet eine Erhöhung der Eingangstemperatur eine Erhöhung der Trocknerleistung und somit eine Erniedrigung der Fertigungskosten.

Die erfindungsgemäße β-Modifikation des Farbstoffs der Formel (I) eignet sich im Gegensatz zu der α-Modifikation uneingeschränkt zum Färben und Bedrucken von Textilmaterialien aus Polyester, wie Polyethylenglykolterephthalat, und/oder Celluloseestern, wie Celluloseacetaten, oder von Mischgeweben aus diesen Materialien mit Wolle oder Cellulose.

Die Überlegenheit der β-Modifikation im Vergleich zur α-Modifikation wird auch beim Färben aus wäßrigem Färbebad unter modernen Praxisbedingungen deutlich. Diese Bedingungen sind gekennzeichnet durch hohe Wickeldichten bei Kreuzspul-und Baumfärbungen, kurze Flottenverhältnisse, also hohe Farbstoffkonzentrationen, sowie hohe Scherkräfte in der Färbeflotte bedingt durch hohe Pumpenleistungen. Auch unter diesen Bedingungen neigt die β-Modifikation nicht zur Agglomeration, und es kommt nicht zu Abfiltrationen auf den zu färbenden Textilmaterialien. Es werden also homogene Färbungen ohne Farbstärkeunterschiede zwischen den äußeren und den inneren Lagen der Wickelkörper erhalten, und die Färbungen zeigen keinen Abrieb. Bei Klotzfärbungen und Drucken mit den erfindungsgemäßen β-Modifikationen schließlich wird ebenfalls ein homogenes, stippenfreies Warenbild erhalten.

Bevorzugt ist die Bildung der stabilen β-Modifikation durch die Umwandlung der instabilen α-Modifikation bei der Mahlung.
Besonders bevorzugt ist die Bildung der β-Modifikation durch die Umwandlung der β-Modifikation durch die Umwandlung der α-Modifikation durch Erhitzen in wäßriger Phase.

### Beispiel 1

a) Zur Herstellung des Farbstoffs der Formel (1) gemäß dem Stand der Technik wurde nach dein in der JP 91 13 264 beschriebenen Verfahren 4-Nitroanilin diazotiert und auf N-(2-Benzoyl-oxethyl)-N-(2-cyanethyl)anilin gekuppelt. Nach Beendigung der Kupplungsreaktion wurde der ausgefallene Farbstoff abfiltriert und mit Wasser neutral gewaschen. Er liegt in dem erhaltenen wasserfeuchten Preßkuchen in der α-Modifikation vor, die das in Figur II wiedergegebene Röntgenbeugungsdiagramm aufweist.
b) 100 g des nach 1a) hergestellten Farbstoffs wurden in 500 ml Wasser in Gegenwart von 25 g eines Dispergiermittels auf Basis Natriumligninsulfonat in einem Autoklaven 3 Stunden bei 130°C gerührt. Die Farbstoffsuspension wurde danach abgekühlt und filtriert. Der Farbstoff liegt als wasserfeuchter Preßkuchen nun in der β-Modifikation vor, die das in Figur I wiedergegebene Röntgenbeugungsdiagramm aufweist.
c) 100 g des nach 1b) hergestellten Farbstoffs in der β-Modifikation wurden mit 233 g eines Natriumligninsulfonats und etwas Wasser in einer Sandmühle gemahlen, bis 60 % der Farbstoffteilchen gleich oder kleiner 1 µm groß waren und anschließend sprühgetrocknet. Man erhielt dabei ein 30 %iges Farbstoffpulver.
d) Mit der gemäß 1c) hergestellten Pulverpräparation wurde eine Kreuzspule mit Polyestergarn gefärbt, wobei die erhaltenen Färbungen egal und reibecht waren, d.h. die Farbtiefen in den äußeren und inneren Lagen des Wickelkörpers waren gleich und es kam nicht zu Farbstoffablagerungen.
e) Der gemäß 1a) hergestellte Preßkuchen in der α-Modifikation wurde dagegen, nachdem er gemäß 1c) gefinisht wurde, in Form seines gefinishten Pulvers zum Färben einer Kreuzspule mit Polyestergarn eingesetzt. Es zeigen sich an der Oberfläche dieser Kreuzspule Farbstoffablagerungen, die sich leicht abreiben ließen und beim Abstricken dieser Kreuzspule wurde deutlich, daß die inneren Lagen heller gefärbt waren als die äußeren, die Färbung also unegal ausgefallen war.

### Beispiel 2

a) In Beispiel 1c) wurde anstelle von 233 g eines Ligninsulfonates eine verminderte Menge von 122 g dieses Ligninsulfonates eingesetzt und der Mahlteig bei einer Trocknereingangstemperatur von 155°C und einer Trocknerausgangstemperatur von 80°C sprühgetrocknet. Man erhielt ein 45 %iges Farbstoffpulver, das im Stippentest keine Stippen zeigte.
b) In Beispiel 2a) wurde in analoger Weise der Preßkuchen des Beispiels 1a) verwendet. Der Stippentest zeigte deutliche Stippen, die sich leicht abreiben ließen.

### Beispiel 3

a) 138 g 4-Nitroanilin wurden in 1 200 ml 10 %iger Salzsäure durch Zugabe von 73 g Natriumnitrit bei 0 bis 5°C diazotiert. Es wurde zur Vervollständigung der Diazotierung 1 Stunde bei dieser Temperatur nachgerührt. Danach wurde die Diazolösung mit 10 g des Preßkuchens in der färbestabilen β-Modifikation sowie 2 g eines Fettsäurepolyglykolethers versetzt. Währenddessen wurden 294 g N-(2-Benzoyloxethyl)-N-(2-cyanethyl)anilin in 650 g Essigsäure gelöst und die Lösung bei 0 bis 10°C innerhalb von 2 Stunden zur Diazolösung zugegeben. Zur Vervollständigung der Kupplung wurde bei auf Raumtemperatur ansteigender Temperatur nachgerührt, der Farbstoff über eine Porzellannutsche abfiltriert und getrocket. Es wurden so ca. 1400 g eines ca. 30 %igen Preßkuchens erhalten. Der so hergestellte Farbstoff liegt zu ca. 60 % in der β-Modifikation, bezogen auf die Summe von α- und β-Modifikation, vor.
b) 100 g des nach 3a) hergestellten Farbstoffs wurden mit 125 g eines Ligninsulfonates in einer Kugelmühle gemahlen, bis 90 % der Farbstoffteilchen gleich oder kleiner 1 µm waren. Die zugesetzte Wassermenge wurde dabei so bemessen, daß der Farbstoffgehalt in der nach dem Aufmahlen erhaltenen Flüssigpräparation 30 % betrug.
c) Die Flüssigpräparation des Beispiels 3b) wurde mehrere Wochen bei 50°C gelagert. Sie zeigte kein kittiges Absetzen und im Stippentest keine Stippen. Es wurden aus ihr ohne aufwendiges Homogenisieren über einen langen Zeitraum hinweg Proben mit jeweils gleichem Farbstoffgehalt entnommen, und beim Thermosolieren bzw. Drucken wurden stippenfreie Warenbahnen erhalten.
d) Dagegen führte die Flüssigpräparation, die analog 3b) mit Farbstoff des Beispiels 1a) hergestellt und ebenfalls mehrere Wochen bei 50°C gelagert wurde, zu einem anderen Ergebnis. So mußte diese Präparation vor der Verwendung aufwendig gerührt werden und ergab dennoch stippige Warenbilder bei Thermosolfärbung und Druck.

### Beispiel 4

65 g des Farbstoffs der allgemeinen Formel (I) in der β-Modifikation wurden zusammen mit 35 g des entsprechenden Farbstoffs in der α-Modifikation entsprechend den Angaben des Beispiels 1c) in einer Sandmühle bei 60°C gemahlen, bis die erforderliche Feinverteilung erzielt wurde und anschließend ebenfalls sprühgetrocknet. Mit dem so erhaltenen Farbstoffpulver wurde analog Beispiel 1d) eine Kreuzspule gefärbt. Dabei wurde ebenfalls eine reibechte und homogene Färbung erhalten.

### Beispiel 5

7,5 g des Farbstoffs der allgemeinen Formel (I) in der α-Modifikation wurden in 200 ml NMP (N-Methylpyrrolidon) unter Erwärmen (T = 120°C) gelöst und unter Rühren auf Raumtemperatur wieder abgekühlt. Der ausgefallene Farbstoff wurde abfiltriert und mit Wasser gewaschen. Er wies das in Figur 1 wiedergegebene Röntgenbeugungsdiagramm der β-Modifikation auf.

## Patentansprüche

1. Farbstoff der Formel (I) in der β-Modifikation 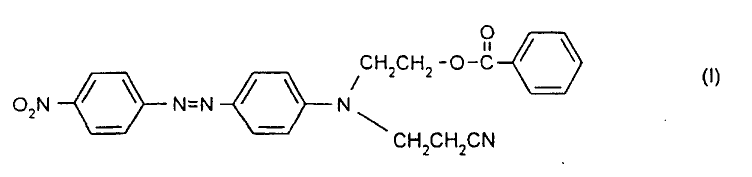 die im Röntgenbeugungsdiagramm (Cu-K_{α}-Strahlung) Linien bei folgenden Beugungswinkeln 2 θ (°) aufweist:
Linien starker Intensität: 10,1; 16,2; 17,6; 20,0; 23,8; 25,0; 26,0; 26,7;
Linien mittlerer und schwacher Intensität: 8,1; 8,9; 18,9; 22,2; 28,3; 29,3.

2. Mischungen, enthaltend einen Farbstoff gemäß Anspruch 1 sowie einem Farbstoff der Formel I in Form seiner α-Modifikation, die im Röntgenbeugungsdiagramm (Cu-K_{α}-Strahlung) bei folgenden Beugungswinkeln 2 θ (°) aufweist:
Linien starker Intensität: 16,3; 17,6; 19,7; 23,2; 25,4; 26,0; 27,2;
Linien mittlerer und schwacher Intensität: 7,3; 11,7; 14,6; 22,0; 24,7; 28,8; 29,6.

3. Mischungen gemäß Anspruch 2, **dadurch gekennzeichnet, daß** sie mehr als 50 Gew.-%, vorzugsweise mehr als 70 Gew.-%, an Farbstoff I in der β-Modifikation, bezogen auf die Summe von α- und β-Modifikation von I enthalten.

4. Verfahren zur Herstellung des Farbstoffs gemäß Anspruch 1 oder der Mischung gemäß Anspruch 2, **dadurch gekennzeichnet, daß** man den Farbstoff der Formel (1) in Form seiner α-Modifikation in einem wäßrigen Reaktionsmedium bei einer Temperatur von 101 bis 160°C, gegebenenfalls unter Druck tempert.

5. Verfahren zur Herstellung des Farbstoffs gemäß Anspruch 1 oder der Mischung gemäß Anspruch 2, **dadurch gekennzeichnet, daß** man den Farbstoff der Formel (I) in Form seiner α-Modifikation in einem organischen Lösungsmittel oder Mischungen von organischen Lösungsmitteln umkristallisiert.

6. Verfahren zur Herstellung des Farbstoffs gemäß Anspruch 1 oder der Mischung gemäß Anspruch 2, durch Azokupplung, das **dadurch gekennzeichnet ist, daß** man diazotiertes 4-Nitroanilin (Diazokomponente) auf N-(2-Benzoyloxethyl)-N-(2-cyanethyl)anilin (Kupplungskomponente) in mineralsauren wäßrigem Medium in Gegenwart von Impfkristallen der färbestabilen β-Modifikation kuppelt.

7. Verfahren zur Herstellung des Farbstoffs gemäß Anspruch 1 oder der Mischung gemäß Anspruch 2, **dadurch gekennzeichnet, daß** man den Farbstoff I in Form seiner α-Modifikation in Gegenwart von geeigneten Dispergiermitteln bei einer Temperatur von 20 bis 80°C mahlt.

8. Farbstoffpräparationen enthaltend
10 bis 15 Gew.-% eines Farbstoffs gemäß Anspruch 1,
10 bis 80 Gew.-% Ligninsulfonat,
0 bis 20 Gew.-% eines Kondensationsprodukts aus Naphthalinsulfonsäure und Formaldehyd,
0 bis 10 Gew.-% nichtionisches Tensid,
0 bis 1,5 Gew.-% Netzmittel,
0 bis 1 Gew.-%) Entschäumer,
0 bis 12 Gew.-% Wasser (Restfeuchte), bis 1,5 Gew.-% Entstaubungsmittel, vorzugsweise auf Mineralölbasis, bezogen auf die Farbstoffpräparationen.

9. Verwendung des Farbstoffs gemäß Anspruch 1 oder der Mischung gemäß Anspruch 2 oder der Farbstoffpräparation gemäß Anspalch 8 zum Färben und Bedrucken von Textilmaterialien aus Polyester und/oder Celluloseestern oder von Mischgeweben aus diesen Materialien und Wolle oder Cellulose.

## Claims

1. Dyestuff of the formula (I) in the β-modification 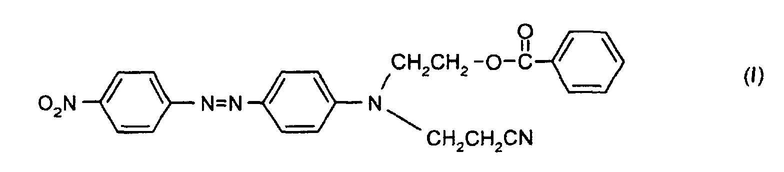 which has lines in the X-ray diffraction diagram (Cu-K_{α} radiation) at the following diffraction angles 2 θ (°):
lines of high intensity: 10.1; 16.2; 17.6; 20.0; 23.8; 25.0; 26.0; 26.7;
lines of moderate and weak intensity: 8.1; 8.9; 18.9; 22.2; 28.3; 29.3.

2. Mixtures comprising a dyestuff according to Claim 1 and a dyestuff of the formula I in the form of its α-modification which has, in the X-ray diffraction diagram (Cu-K_{α} radiation), at the following diffraction angles 2 θ (°):
lines of high intensity: 16.3; 17.6; 19.7; 23.2; 25.4; 26.0; 27.2;
lines of moderate and weak intensity: 7.3; 11.7; 14.6; 22.0; 24.7; 28.8; 29.6.

3. Mixtures according to Claim 2, **characterized in that** they comprise more than 50 % by weight, preferably more than 70 % by weight, of dyestuff I in the β-modification, based on the sum of the α-and β-modification of I.

4. Process for the preparation of the dyestuff according to Claim 1 or of the mixture according to Claim 2, **characterized in that** the dyestuff of the formula (I) in the form of its α-modification is heat-treated at a temperature of from 101 to 160°C, if appropriate under pressure, in an aqueous reaction medium.

5. Process for the preparation of the dyestuff according to Claim 1 or of the mixture according to Claim 2, **characterized in that** the dyestuff of the formula (I) in the form of its α-modification is recrystallized in an organic solvent or mixtures of organic solvents.

6. Process for the preparation of the dyestuff according to Claim 1 or of the mixture according to Claim 2 by azo coupling, which is **characterized in that** diazotized 4-nitroaniline (diazo component) is coupled to N-(2-benzoyloxethyl)-N-(2-cyanoethyl)aniline (coupling component) in a mineral acid aqueous medium in the presence of seed crystals of the β-modification which is stable during dyeing.

7. Process for the preparation of the dyestuff according to Claim 1 or of the mixture according to Claim 2, **characterized in that** the dyestuff I in the form of its α-modification is ground in the presence of suitable dispersing agents at a temperature of 20 to 80°C.

8. Dyestuff preparations comprising
10 to 15 % by weight of a dyestuff according to Claim 1,
10 to 80 % by weight of ligninsulphonate,
0 to 20 % by weight of a condensation product of naphthalenesulphonic acid and formaldehyde,
0 to 10 % by weight of nonionic surfactant,
0 to 1.5 % by weight of wetting agent,
0 to 1 % by weight of defoamer,
0 to 12 % by weight of water (residual moisture) and up to 1.5 % by weight of dust removal agent, preferably based on mineral oil, based on the dyestuff preparations.

9. Use of the dyestuff according to Claim 1 or of the mixture according to Claim 2 or of the dyestuff preparation according to Claim 8 for dyeing and printing textile materials of polyester and/or cellulose esters or of blend fabrics of these materials and wool or cellulose.

## Revendications

1. Colorant de formule (I) dans la modification β 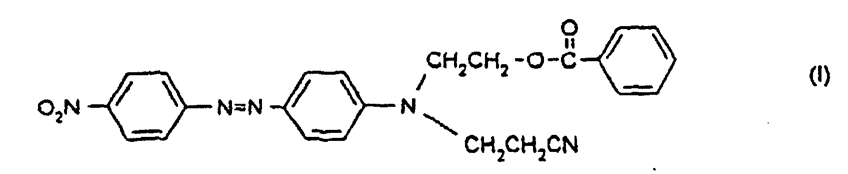 qui présente, dans le diagramme de diffraction de rayons X (rayonnement Cu-K_{α}) des raies aux angles de diffraction 2 θ (°) suivants:
Raies de forte intensité : 10,1 ; 16,2 ; 17,6 ; 20,0 ; 23,8 ; 25,0 ; 26,0 ; 26,7;
Raies d'intensité moyenne et faible : 8,1 ; 8,9 ; 18,9 ; 22,2 ; 28,3 ; 29,3.

2. Mélanges contenant un colorant selon la revendication 1 ainsi qu'un colorant de formule I sous forme de sa modification α, qui présente, dans le diagramme de diffraction de rayons X (rayonnement Cu-K_{α}) aux angles de diffraction 2 θ (°) suivants:
Raies de forte intensité : 16,3 ; 17,6 ; 19,7 ; 23,2 ; 25,4 ; 26,0 ; 27,2;
Raies d'intensité moyenne et faible : 7,3 ; 11,7 ; 14,6 ; 22,0 ; 24,7 ; 28,8 ; 29,6.

3. Mélanges selon la revendication 2,
**caractérisés en ce qu'**ils contiennent plus de 50% en poids, de préférence plus de 70% en poids, de colorant I dans la modification β, par rapport à la somme des modifications α et β de I.

4. Procédé pour la préparation du colorant selon la revendication 1 ou du mélange selon la revendication 2, **caractérisé en ce qu'**on traite thermiquement le colorant de formule (I) sous forme de sa modification α dans un milieu réactionnel aqueux à une température de 101 à 160°C, le cas échéant sous pression.

5. Procédé pour la préparation du colorant selon la revendication 1 ou du mélange selon la revendication 2, **caractérisé en ce qu'**on recristallise le colorant de formule (I) sous forme de sa modification α dans un solvant organique ou des mélanges de solvants organiques.

6. Procédé pour la préparation du colorant selon la revendication 1 ou du mélange selon la revendication 2, par azocouplage, **caractérisé en ce qu'**on couple de la 4-nitroaniline diazotée (composant diazo) sur de la N-(2-benzoyloxyéthyl)-N-(2cyanoéthyl)aniline (composant de couplage) dans un milieu aqueux acide minéral en présence de cristaux d'ensemencement de la modification β de teinte stable.

7. Procédé pour la préparation du colorant selon la revendication 1 ou du mélange selon la revendication 2, **caractérisé en ce qu'**on broie le colorant I sous forme de sa modification α en présence d'agents de dispersion appropriés à une température de 20 à 80°C.

8. Préparations de colorant contenant :
10 à 15% en poids d'un colorant selon la revendication 1,
10 à 80% en poids de sulfonate de lignine
0 à 20% en poids d'un produit de condensation d'acide naphtalènesulfonique et de formaldéhyde
0 à 10% en poids d'agent tensioactif non ionique
0 à 1,5% en poids d'agent mouillant,
0 à 1% en poids d'anti-mousse,
0 à 12% en poids d'eau (humidité résiduelle), jusqu'à 1,5% en poids d'anti-poussière, de préférence à base d'huile minérale, par rapport aux préparations de colorant.

9. Utilisation du colorant selon la revendication 1 ou du mélange selon la revendication 2 ou de la préparation de colorant selon la revendication 8 pour la teinture et l'impression de matériaux textiles en polyester et/ou en esters de cellulose ou de tissus mixtes de ces matériaux et de laine ou de cellulose.
